(19) Europäisches Patentamt

European Patent Office

Office européen des brevets

(11) **EP 1 717 917 A1**

(12) **EUROPEAN PATENT APPLICATION**

(43) Date of publication:
**02.11.2006 Bulletin 2006/44**

(51) Int Cl.:
*H01S 3/117* *(2006.01)*     *G02F 1/11* *(2006.01)*
*H01S 3/11* *(2006.01)*       *H01S 3/13* *(2006.01)*

(21) Application number: **06113130.6**

(22) Date of filing: **26.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.04.2005 US 675357 P**
**09.06.2005 US 149524**

(71) Applicant: **Honeywell International Inc.**
**Morristown, New Jersey 07962 (US)**

(72) Inventors:
• **Rapoport, William R.**
**Bridgewater, CO 08807 (US)**
• **Vetorino, Steven R.**
**Berthoud, CO 80513 (US)**

(74) Representative: **Haley, Stephen**
**Gill Jennings & Every LLP**
**Broadgate House**
**7 Eldon Street**
**London EC2M 7LH (GB)**

(54) **Ramped RF acoustooptical Q-switch driver**

(57)     A device and a method for driving a transducer (30) of an acoustooptical Q-switch (24). The device includes a signal processor that has an input. The signal processor is configured to output a sine wave to drive the transducer at a frequency selected to create a standing acoustic wave (33) in the acoustooptical deflection material (27). The standing acoustic wave (33) is configured to diffract an incident beam (15) and has an amplitude based upon a signal at the input. A control wave generator is configured to generate a control signal at the input. The control signal is a function of a selected ratio relating an energy of the incident beam (15) to an energy of a diffracted beam (15a) within the acoustooptical Q-switch (24).

*FIG. 2b*

**Description**

Q-Switching is a mode of operating a laser in which energy is stored in the laser material during pumping in the form of atoms in the excited state in the upper laser level and suddenly released in a single, short burst. A highly simplistic view of a laser cavity includes a gain medium between collimated mirrors. Q-switching refers to generating short high intensity pulses out of lasers by modulating the Q of a resonator cavity from a high loss to low loss condition.
Examples of such elements that can serve as effective modulators are acoustooptic devices, electro-optic devices, passive saturable units, and spinning mirrors. Each of these elements trade off characteristics with respect to efficiency, size, thermal environmental behavior, optical damage limits, ease of alignment and drive requirements.
Acoustooptical Q-switching involves the use of a transparent element generally known as an acoustooptic deflection material placed in the laser cavity. The acoustooptic deflection material, when excited by a transducer in communicative contact with the acoustooplic deflection material, exhibits a diffraction effect on the intracavity laser output and diffracts part of the beam out of the cavity alignment, resulting in intra-cavity loss. When the acoustic wave is removed, the diffraction effect disappears, cavity loss is greatly reduced, and the system emits a pulse. Acoustooptical Q-switches are ideally suited for use with continuous wave pumped systems or pulsed lasers operated with lower gain.
The acoustooptical Q-switch works by creating a phase grating that when phase matching conditions are met via a combination of angle, acoustooptic deflection material, Radio frequency ("RF") drive frequency and laser wavelength, some fraction of the incident beam is diffracted away from the main beam. A diversity of RF drivers exist that optimize the system efficiency based on the desired performance characteristics. These characterisitics can be purity of frequency output, linearity, and turn on/turn off speed and ease of modulation. Such RF drivers are selected to be efficient at driving a particular frequency into a matched load (generally selected at 50 ohms). Use of such drivers to generate RF power when applied to the Q-switch, also heats the device. The greater the RF input power, the greater the heating of the acoustooptic device.
A key parameter in acoustooptics is:

$$Q = \left(\frac{2\pi}{n}\right)\left(\frac{\lambda L}{\Lambda^2}\right)$$

Equation 1

Where L is the interaction length
$\lambda$ is the light wavelength
$\Lambda$ is the acoustic wavelength
n is the refractivc index of the material
The equation is solved according to the selected diffraction condition:

for Q<1 the Raman-Nath diffraction dominates
for Q> 7 Bragg condition dominates

Equation 1 delineates the acousto-optic regime of operation

$$\frac{I_1}{I_0} = \eta \times Sinc^2\left(\eta + \left(\Delta k \frac{L}{2}\right)^2\right)^{\frac{1}{2}}$$

Equation 2

Where $I_1$ and $I_0$ represent the diffracted and incident light intensity; and
$\Delta k$ is the momentum mismatch of the incident light and the acoustic propagation vectors and $\eta$ is:

$$\eta = \left(\frac{\pi^2}{2\lambda^2}\right)\left(\frac{n^6 p^2}{\rho v^3}\right)\left(\frac{L}{H}\right) \times P_a$$

Equation 3

where p is the photoolastic coefficient;

ρ is the mass density;

H is the height of the acoustic beam;

$P_a$ is the acoustic power; and

$$\left(\frac{n^6 p^2}{\rho v^3}\right)$$

is the Figure of Merit, M2

Equation 2 delineates the diffracted beam intensity divided by the input intensity. Equation 3 is the diffraction efficiency where M2 is a material property of the acoustooptic deflection material

The Sinc function is so small that $\eta$ is essentially the diffraction efficiency of the device.

The highly simplistic view of a laser cavity employs 2 mirrors $R_1$ and $R_2$, a gain media of length $l$ with a gain coefficient g (also a function of time) and other distributed losses al (lumped all of the intracavity losses into a single parameter). The Q-switch (1-$\eta$) term is a time variable loss term where the loss is high when the RF is "on" and then the loss is very low when the RF is turned "off". The condition for oscillation is then:

$$R_1 R_2 \big(1 - \eta(\tau)\big)\exp\big(g(t) - \alpha\big)2l = 1 \qquad \text{Equation } 4$$

Thermal heating of the acoustooptical Q-switch is due to the average input power from the RF driver. The heating effect can cause severe temperature gradients within the laser resonator. These gradients can cause additional intra-cavity loss resulting in poorer laser performance.

What is needed in the art is a device and method to achieve proper operation of the acoustooptic device (lasing hold-off), while minimizing thermal effects in the acoustooptical Q-switch.

The present invention includes a device and method for driving a transducer of an acoustooptical Q-switch. The transducer is configured to selectively propagate acoustic waves in an acoustooptical deflection material. Optimally, the media exhibits a high acoustic figure of merit, which is a function of its material properties as well as high optical transparency at the laser wavelength. The device includes a signal generator that has an input. The signal generator is configured to output a sine wave to drive the transducer at a frequency selected to create a standing acoustic wave in the acoustooptical deflection material. The standing acoustic wave is configured to diffract an incident beam, of wavelength $\lambda$, and has an amplitude based upon a signal at the input. A control wave generator is configured to generate a control signal at the input. The control signal is a function of a selected ratio relating an energy of the incident beam to an energy of a diffracted beam at the acoustooptical deflection material.

In accordance with further aspects of the invention, the device and method include selecting a ratio based upon a laser system gain value.

In accordance with other aspects of the invention, the device and method include selecting the ratio based upon the laser system gain value relative to a lasing threshold.

In accordance with yet other aspects of the invention, the device and method include selecting the ratio such that the laser system gain value is less than the lasing threshold prior to the pulse onset.

In accordance with still another aspect of the invention, the device and method maintain the system gain value at a value less than the lasing threshold before the pulse onset.

To initiate the pulse, other aspects of the invention include selecting the ratio such that the laser system gain value exceeds the lasing threshold.

As will be readily appreciated from the foregoing summary, the invention provides a minimally energized acoustooptical switch by maintaining the laser system gain at its operable maximum less than the lasing threshold.

The preferred and alternative embodiments of the present invention are described in detail below with reference to the following drawings.

FIG. 1 is an example of a solid-state laser system containing an acoustooptical Q-switch in accordance with the present invention;

FIG. 2a is a block diagram of an analog waveform driven RF amplifier system for driving an acoustooptical Q-switch;

FIG. 2b is a block diagram of an digitally synthesized waveform driven RF amplifier system for driving an acoustooptical Q-switch and,

FIG. 3 is a timing diagram detailing the events of an analog waveform driven RF amplifiers system for driving an acoustooptical Q-switch.

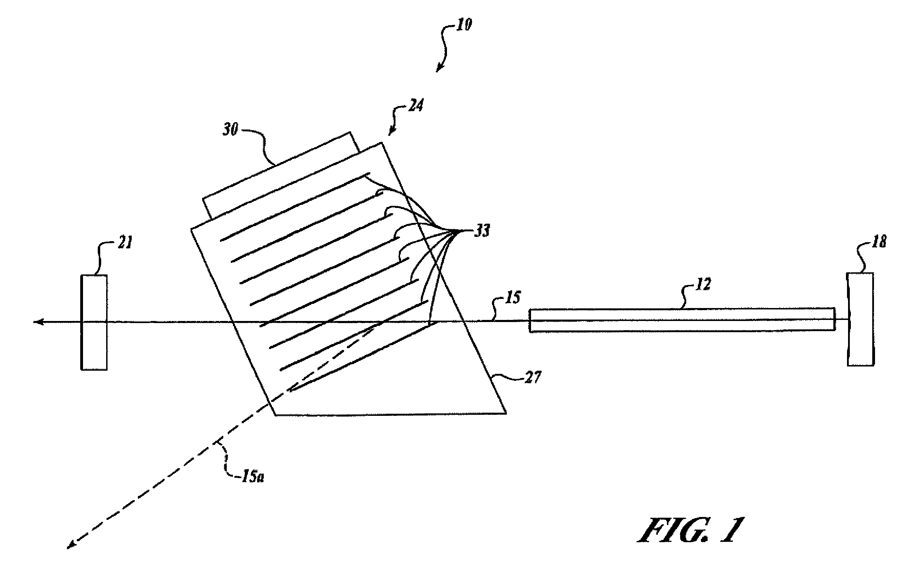

Referring to FIG. 1, the purpose of an acoustooptical Q-switch 24 is to create a sufficiently high loss within the laser resonant cavity to allow energy to be stored in the laser material 12 until an output pulse is desired. RF power applied to a transducer 30 in operative communication with the acoustooptical deflection material 27 diffracts some portion of a laser beam 15 within the medium. Upon reducing the RF drive power, the laser signal builds up from noise. This noise signal evolves into a high amplitude laser pulse since the system 10 gain is now greater than the system 10 loss.

Depending upon conditions, that diffraction can be primarily a single beam (Bragg Condition), or multiple beams (Raman-Nath condition). In any case, the diffracted beam causes the energy of the incident laser beam 15 to fall outside of the resonant cavity thereby creating loss. That loss is generally proportional to input RF power and related to physical construct, material parameters, incident beam parameters and polarization state of the incident beam.

FIG. 1 illustrates a longitudinal diode-pumping solid-state laser resonator 10. Four functional elements are necessary in the solid-state laser resonator to produce coherent light by stimulated emission of radiation. A laser material 12 includes atoms or molecules that can be excited to a state of inverted population; that is, where more atoms or molecules are in an excited state than in some lower energy state.

An effective excitation mechanism (not shown) serves to "pump" atoms from a highly populated ground energy level into a higher energy level in order to increase a population of the higher energy level over a population in the lower energy level. An increase in population of the lower energy level to a number above that in the high energy level will negate the population inversion and thereby prevent amplification of emitted light by stimulated emission. The laser resonator 10 includes an excitation pump (not shown) creates an excited state population density in a laser material 12. The rear laser cavity mirror 18 acts as a high reflector for the emitted light from the laser material 12. The mirror 18 can have curved surfaces in accordance with laser design as performed by those familiar with that art.

A simple Brewster plate polarizer 20 can, optionally, be used within the laser resonator to select a single polarization state; the single polarization state being beneficial when the accoustooptic Q-switch 24 is operated in the longitudinal mode. The diffractive properties of the accoustooptic Q-switch 24 operated in the longitudinal mode are much greater when the polarizer 20 is present.

An outcoupling mirror 21, is used to pass some of the light as a laser output 15 while reflecting some of the light (at the laser emission wavelength) back into the cavity. The outcoupling mirror 21 can also exhibit curvature as deemed desirable by those knowledgeable in the art.

An RF driver 36 supplies energy to the transducer 30 such that RF excitation within the acoustooptical deflection material 27 to selectively control losses within the laser resonator 10 such that the gain in the laser resonator 10 is selectively exceeded by the aggregate losses within the laser resonator 10. The intracavity laser beam 15 as a laser beam is emitted when the gain in the laser resonator 10 exceeds a lasing threshold. The acoustooptical Q-switch 24 is capable of selectively diffracting some fraction of the intracavity laser beam 15 out of the laser resonator cavity creating a variable loss condition.

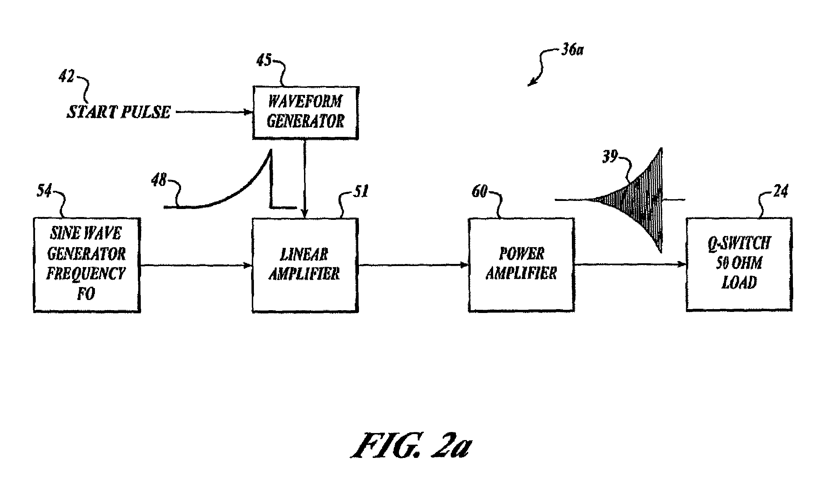

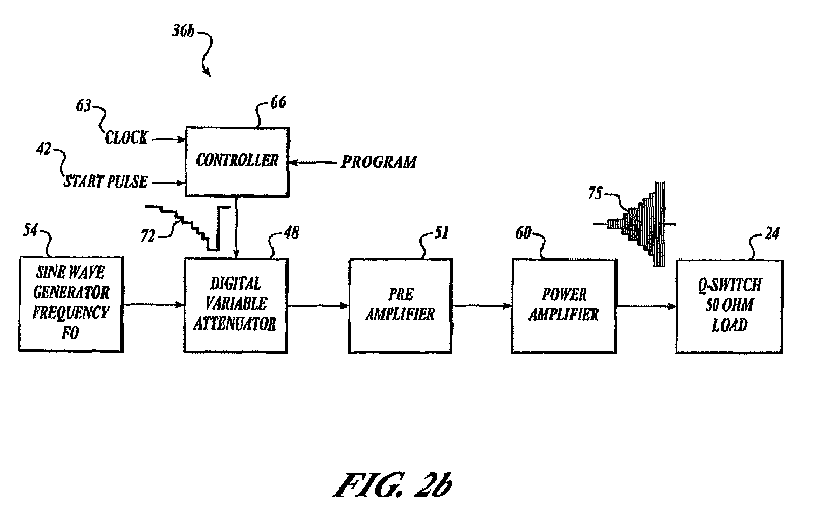

The acoustooptical Q-switch 24 creates an interaction between an ultrasonic acoustic wave 33 and the laser output 15 within the acoustooptical deflection material 27. The transducer 30 is adhered to the acoustooptical deflection material 27 and when energized by means of the RF driver circuit 36a (FIG. 2a), 36b (FIG. 2b), the transducer 30 creates ultrasonic acoustic waves 33 that propagate parallel to transducer 30 at a velocity related to the selected acoustooptical deflection material 27.

The intra-cavity laser beam 15 enters the acoustooptical deflection material 27 in a direction suitable for deflection by the acoustic wave 33 in the acoustooptical deflection material 27. The intracavity laser beam 15 is diffracted to form a diffracted intracavity laser beam 15a at a fractional intensity of the intracavity laser beam 15 related to the applied RF power when the relation between the acoustic wave 33 and the incident intracavity laser beam 15 satisfies the Bragg condition. If the laser material 12 is constructed against 0-dimensional diffracted light (undifftacted light), a portion of the intracavity diffracted laser beam 15a (deviates from a laser material axis when the RF signal is impressed). As a result, loss occurs in the laser material 12 and laser oscillation is suppressed.

To make use of this phenomenon, an RF signal is impressed for a certain length of time only (maintaining the laser resonator 10 at a low Q-value) to suspend laser oscillation. During the low Q-value period, excitation pumping accumulates the population inversion of the laser material 12. When the RF signal is reduced to zero (the laser resonator 10 at a high Q-value) and the loss to the laser resonator 10 is reduced, the accumulated energy is activated as laser oscillation in a pulse form.

The present invention provides a method and device for tailoring the applied RF input power to maintain a hold-off condition within the laser resonator 10. A hold-off condition within the laser resonator 10 is a condition in which a laser system gain has not reached a level to exceed a lasing threshold. The method and device tailors the applied RF power to that necessary to maintain the hold-off condition within the medium by continuing diffraction. By tailoring the RF power applied to the acoustooptic device, less heat is generated within the acoustooptic device than under a constant power RF signal thereby requiring much less heat to be removed from the acoustooptic Q-switch 24 and, thus, optical distortion is reduced.

Referring to FIG. 2a, an analog RF driver circuit 36a is used to generate a RF waveform 39 suitable to drive the acoustooptical Q-switch 24. The analog RF driver circuit 36a includes a waveform generator 45 that is triggered by a start pulse 42 triggering the waveform generator 45 to generate a defined waveform to amplitude modulate the sine wave generator 54 in the linear amplifier 51. The defined waveform is selected to energize the acoustooptical deflection material 27 (FIG. 1) with the minimum power necessary to prevent lasing in the laser resonator 10 (FIG. 1). A frequency of the sine wave generator 54 is the frequency in which the RF driver 36 is impedance matched to the acoustooptic Q-switch 24. The generated waveform 48 is selected to most closely generate sufficient loss in the laser resonator 10 to prevent laser oscillation until an output is desired.

A sine wave generator 54 is configured according to any of several methods known in the art including filtered sources, digitally synthesized waveforms crystal oscillators or other methods that are suitable to emit a sine wave. The frequency of the sine wave is selected according to optimally set up the diffraction conditions within the acoustooptical deflection material 27.

The outputs of the sine wave generator 54 and the waveform generator 45 are multiplied at inputs of a linear amplifier 51. In one embodiment, the linear amplifier 51 will use a bias for operation but the bias is only supplied as the linear amplifier 51 requires and thus, not necessary to the invention if a suitable amplifier is selected.

The output of the linear amplifier 51 is amplified at a power amplifier 60 to suitably drive the transducer 30. As with the linear amplifier 51, some power amplifiers 60 use a bias for suitable operation, but, again, not all power amplifiers 60. The output waveform 39 from power amplifier 60 is suitably transmitted to drive the transducer 30.

Those skilled in the art will readily perceive that alternate means may also suitably drive the transducer 30 given the waveform 48 output of the waveform generator 45 and a sine wave of suitable frequency such as the output of the sine wave generator 54. Examples of such alternate means would be simple linear ramps that are amplified. Other alternatives include systems with feedback loops that detect the onset of laser oscillation and, when detected, minimally increases the RF drive power suitably to suppress laser oscillation until the desired laser pulse. The linear amplifier 51 can also include an analog variable attenuator that can be controlled by the waveform generator 45 and the power amplifier 60 to boost the signal. An example of an analog variable attenuator is a HMC346LP3 by Hittite™.

FIG. 2b depicts a second embodiment of an RF driver 36b. A sine wave generator 54 operating at a design frequency $f_0$ creates a low-level frequency source for amplification. As above, any form of sine wave generator 54 known in the art including filtered sources, digitally synthesized waveforms, or crystal oscillators, may suitably generate the sine waves to be input into a digital variable attenuator 49.

A controller 66 is configured to generate a waveform 72 according to a clock signal 63 and a start pulse 42. The waveform 72 modulates an amplitude of a sine wave RF signal, which is the output of the digital variable attenuator 49. The waveform 72 need not be in the form of a single digital signal but can also be in the form of a series or a parallel data stream that control is sent to control a digital variable attenuator 49 configured to shape the sine wave output of the sine wave generator 54.

The controlling waveform 72 might be in the form of digital words of n places such as 2n= 4, 8, or 16 bits, or other such words. As in the case of the analog driver 36a (FIG. 2a), the waveform 72 is selected to provide, after suitably amplification, sufficient energy at the acoustooptical Q-switch 24 to diffract some portion of the intracavity laser beam 15 (FIG. 1) sufficiently to prevent laser oscillation

The digital variable attenuator 49 can accept serial or parallel digital input and will attenuate the output of sine wave generator 54 to produce a wave suitable to set up diffraction within the acoustooptical Q-switch 24. An example of a digital attenuator 51b is the model AA220-25 by Skyworks™. The digital variable attenuator 49 can be either linear or nonlinear in response.

The output of the digital variable attenuator 49 is presented at an input of a linear amplifier 51. Typically, a linear amplifier 51 will use a bias for operation but the bias is only supplied as the linear amplifier 51 requires and thus, not necessary to the invention if a suitable amplifier is selected.

The output of the linear amplifier 51 is amplified at a power amplifier 60 to produce an output waveform 75. As with the linear amplifier 51, some power amplifiers 60 use a bias for suitable operation, but, again, not all power amplifiers 60. The output waveform 75 from the power amplifier 60 is suitably transmitted to drive the transducer 30.

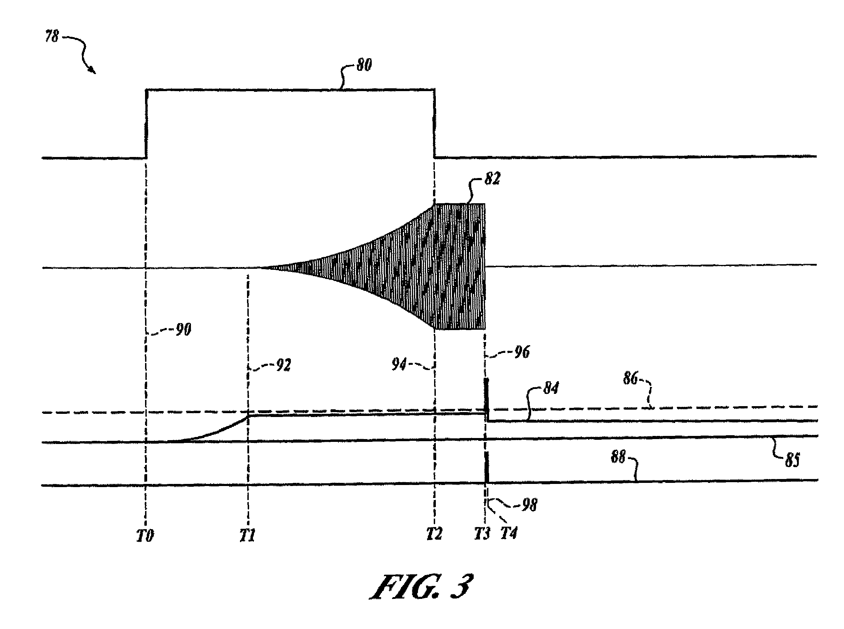

Referring to FIGS. 1 and 3, a timing diagram 78 shows the operation of the acoustooptical Q-switch 24. Four significant curves are shown: a laser excitement trace 80 indicating the output power from a laser diode pumping diode (not shown) exciting the laser material 12; the controlling waveform 82 indicating the power sent to the transducer 30; a laser system loop gain trace 84 indicating the laser gain-loss condition within laser resonator 10; and a laser resonantor 10 output trace 88. Magnitudes and shapes of the waveforms (the laser excitement trace 80; the controlling waveform 82; the laser system loop gain trace 84; and the laser resonator output 88) are characteristic of an exemplary laser resonator 10 and the exact shapes of the traces will vary according to selected laser material 12, laser pumping conditions, and laser resonators 10.

At time $T_0$ 90, the laser diode pumping diode (not shown) begins excitation by pumping energy into the laser material 12, as the laser excitation trace 80 reflects an increase in pumping energy. The laser system loop gain trace 84 climbs in response to the pumped energy from a baseline 85 of minimal energy for the laser system gain trace 84 and approaches a lasing threshold 86 for the laser material 12 indicating that the laser action is below the lasing threshold 86.

At time $T_1$ 92, the gain-loss in the laser resonator 10 is nearing the lasing threshold 86. To prevent lasing, controlling waveform 82 increases according to the calculated energy necessary to cause forming of acoustic waves 33 acting as a diffraction grating.

In the example FIG. 3 depicts, the laser kinetics are such that there is not additional gain increase after pumping energy is terminated. Another laser material 12 of distinct materials would have distinct laser kinetics. According to the laser kinetics, the energy within the laser material 12 climbs as pumping occurs, as evidenced by the laser excitation trace 80. For that reason, in the period between $T_1$ 92 and $T_2$ 94, the energy to the transducer 30 imparts to the acoustooptical deflection material 27 must increase, as indicated by the shape of the controlling waveform 82. By increasing the diffraction of the intracavity laser beam 15 more of the intracavity laser beam 15 is diffracted into the laser beam 15a. The growing controlling waveform 82 allows the overall energy stored in the laser medium 12 to increase to the desired level while maintaining the laser resonator 10 below the lasing threshold 86.

At $T_2$ 94, because the excitation input has terminated, as indicated by the laser excitement trace 80 returning to minimal energy, the controlling waveform 82 is no longer required to increase, but can maintain a level sufficient to prevent laser oscillation. As indicated by the laser system loop gain trace 84, the total system gain remains constant (there is actually a small time dependent loss due to the lifetime decay of the upper laser level).

At time $T_3$, the time selected for laser pulsing, the controlling waveform 82 is reduced to zero. Gain in the laser resonator 10 (as indicated by the laser system gain trace 84) rapidly increases above lasing threshold 86 as indicated by the spike on waveform 84.

At time $T_4$ 98, a laser pulse exits the laser resonator 10 exhausting a large portion of the laser system stored energy from within laser material 12. After the emission of the laser pulse, the laser system loop gain trace 84 is reduced below the lasing threshold 86. This laser system loop gain trace 84 continues to decay with the characteristic lifetime of the excited ions and is dependent upon the laser media used. Regardless of the laser material 12, the principles illustrated in the several embodiments set forth herein will function to require less RF driver 36 (FIG. 1) output and will heat the acoustooptical deflection material 27 much less than existing systems.

**Claims**

1. A device for driving a transducer of an acoustooptical Q-switch in a laser resonator, the transducer configured to selectively propagate acoustic waves in a accustooptical deflection material, the device comprising:

   a signal processor having an input and configured to output a sine wave to drive the transducer, the sine wave having a frequency selected to create a standing acoustic wave in the acoustooptical deflection material, the standing acoustic wave configured to diffract an incident beam, the standing acoustic wave having an amplitude based upon a signal received at the input; and
   a control wave generator configured to generate a control signal at the input, the control signal being a function of a selected ratio relating an energy of the incident beam to an energy of a diffracted beam at the acoustooptical deflection material.

2. The device of Claim 1, wherein the ratio is selected based upon an energy stored in the laser resonator.

3. The device of Claim 2, wherein the ratio is selected based upon an energy stored in the laser resonator relative to a lasing threshold.

4. The device of Claim 3, wherein the ratio is further selected based upon a pulse onset, wherein the ratio is selected such that the energy stored in the laser resonator is less than the lasing threshold prior to the pulse onset, wherein the energy stored in the laser resonator is maintained at an operable maximum value less than the lasing threshold prior to the pulse onset, and wherein the selected ratio is selected such that the energy stored in the laser resonator exceeds the lasing threshold at about the pulse onset.

5. A method for driving a transducer of an acoustooptical Q-switch in a laser resonator, the transducer configured to selectively propagate acoustic waves in an acoustooptical deflection material in the acoustooptical Q-switch the method comprising:

generating a sinusoidal signal having an amplitude, the amplitude sized according to a selected ratio relating an energy of an incident beam to an energy of a diffracted beam at the acoustooptical deflection material; generating a standing acoustical wave in the acoustooptical deflection material based on the sinusoidal signal received at a transducer; and

diffracting an incident laser output using the standing acoustical wave according to the selected ratio.

6. The method of Claim 5, wherein the ratio is selected based upon an energy stored in the laser resonator.

7. The method of Claim 6, wherein the ratio is selected based upon the energy stored in the laser resonator relative to a lasing threshold.

8. The method of Claim 7, wherein the ratio is further selected based upon a pulse onset.

9. The method of Claim 8, wherein the ratio is selected such that the energy stored in the laser resonator is less than the lasing threshold prior to the pulse onset.

10. The method of Claim 8, wherein the energy stored in the laser resonator is maintained at an operative maximum value less than the lasing threshold prior to the pulse onset.

*FIG. 1*

*FIG. 2a*

EP 1 717 917 A1

*36b*

*63*

CLOCK

*42*

START PULSE

*66*

CONTROLLER ← *PROGRAM*

*72*

*54*

SINE WAVE
GENERATOR
FREQUENCY
FO

*48*

DIGITAL
VARIABLE
ATTENUATOR

*51*

PRE
AMPLIFIER

*60*

POWER
AMPLIFIER

*75*

*24*

Q-SWITCH
50 OHM
LOAD

*FIG. 2b*

*FIG. 3*

**European Patent Office**

## EUROPEAN SEARCH REPORT

Application Number

EP 06 11 3130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 515 083 A (LITTON SYSTEMS, INC) 25 November 1992 (1992-11-25) | 1-3,5-7 | INV. H01S3/117 G02F1/11 |
| Y | * column 4, line 15 - column 5, line 38; figures 1,3-5 * <br> * column 6, lines 3-30 * <br> * column 7, line 34 - column 8, line 40 * | 4,8-10 | ADD. H01S3/11 H01S3/13 |
| X | US 3 836 866 A (AMMANN E,US ET AL) 17 September 1974 (1974-09-17) | 1,3-5, 7-9 | |
| Y | * column 2, line 32 - column 3, line 55; figures 1,4,5 * | 4,8-10 | |
| X | US 5 197 074 A (EMMONS, JR. ET AL) 23 March 1993 (1993-03-23) | 1-3,5-7 | |
| Y | * column 4, line 4 - column 7, line 20; figures 1-3 * | 4,8-10 | |
| X | US 3 904 987 A (CHENG ET AL) 9 September 1975 (1975-09-09) * column 3, line 11 - column 6, line 12; figures 1,3 * | 1,2,5,6 | |
| A | DE 199 29 332 A1 (LANDWEHR ELECTRONIC GMBH) 28 December 2000 (2000-12-28) * column 1, lines 29-36 * <br> * column 2, lines 11-33 * <br> * column 3, line 21 - column 5, line 4; figures 1-3 * | 1,5 | TECHNICAL FIELDS SEARCHED (IPC) H01S G02F |
| A | XIE W ET AL: "FLUORESCENCE FEEDBACK CONTROL OF AN ACTIVE Q-SWITCHED DIODE-PUMPED ND:YVO4 LASER" APPLIED OPTICS, OSA, OPTICAL SOCIETY OF AMERICA, WASHINGTON, DC, US, vol. 39, no. 6, 20 February 2000 (2000-02-20), pages 978-981, XP000928335 ISSN: 0003-6935 * the whole document * | 1,5 | |

The present search report has been drawn up for all claims

| Place of search | Date of completion of the search | Examiner |
|---|---|---|
| Munich | 12 July 2006 | Laenen, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 717 917 A1**

## ANNEX TO THE EUROPEAN SEARCH REPORT
## ON EUROPEAN PATENT APPLICATION NO.

EP 06 11 3130

12-07-2006

| Patent document cited in search report | | Publication date | Patent family member(s) | | Publication date |
|---|---|---|---|---|---|
| EP 0515083 | A | 25-11-1992 | CA | 2068348 A1 | 14-11-1992 |
| | | | US | 5157677 A | 20-10-1992 |
| US 3836866 | A | 17-09-1974 | NONE | | |
| US 5197074 | A | 23-03-1993 | AU | 3329993 A | 28-07-1993 |
| | | | JP | 6505835 T | 30-06-1994 |
| | | | WO | 9313575 A1 | 08-07-1993 |
| US 3904987 | A | 09-09-1975 | NONE | | |
| DE 19929332 | A1 | 28-12-2000 | NONE | | |

EPO FORM P0459